# EUROPEAN PATENT APPLICATION

(11) **EP 4 064 285 A1**
(43) Date of publication of application: **28.09.2022**
(21) Application number: 21205267.4
(22) Date of filing: 28.10.2021
(51) Int. Cl.: G11B 27/34, H04N 21/472

(54) **METHOD FOR VIDEO PROCESSING, DEVICE, SERVER, AND STORAGE MEDIUM**

(30) Priority: 26.03.2021 CN 202110331015
(71) Applicant: Beijing Dajia Internet Information Technology Co., Ltd., Beijing 100085 (CN)
(72) Inventor: LI, Ji, Beijing, 100085 (CN)
(74) Representative: advotec.

(57) **Abstract**

A method for video processing includes obtaining (S302) pieces of first key clip information based on an operation for adding key clip information to a first video. The pieces of first key clip information correspond to multiple first video clips of the first video respectively. The method also includes sending (S304) the pieces of first key clip information. The pieces of first key clip information are configured to be displayed on the playback interface of the first video. A first video clip corresponding to a selected piece of first key clip information is configured to be played on the playback interface in response to a selection operation on the first key clip information.

## Description

### TECHNICAL FIELD

The disclosure relates to a field of computer technologies, and more particularly to a method and an apparatus for video processing, a device, a server, and a storage medium.

### BACKGROUND

With the development of Internet technologies, many video platforms have emerged and users can share videos and watch videos on these video platforms. While watching a video, in a case that the user is interested in a certain part of the video, the user will directly fast forward the video to the content of interest by dragging a progress bar.

However, in the process of dragging the progress bar, the user does not know where to drag the progress bar, video content at that position being of interest to the user. In this way, the user will keep trying to drag the progress bar until it is dragged to a certain position where the video content is of interest to the user, which results in inconvenience for the user to select and play the video content of interest.

### SUMMARY

The disclosure provides a method and an apparatus for processing a video, a device, a server, and a storage medium, to at least solve a problem, existing in related arts, of the troublesome way for the user to select and play the video content of interest. Technical solutions of the disclosure are as follows.

A method for video processing is provided. The method includes: obtaining pieces of first key clip information based on an operation for adding key clip information to a first video, in which the pieces of first key clip information correspond to multiple first video clips of the first video respectively; and sending the pieces of first key clip information, in which the pieces of first key clip information are configured to be displayed on a playback interface of the first video, and a first video clip corresponding to a selected pieces of first key clip information is configured to be played on the playback interface in response to a selection operation on the first key clip information.

Optionally, obtaining the pieces of first key clip information includes obtaining content information of each first video clip from at least one image frame of the first video clip; and extracting the first key clip information from the content information.

Optionally, the method includes receiving pieces of second key clip information and a second video, in which the pieces of second key clip information correspond to multiple second video clips of the second video respectively; displaying a playback interface of the second video, in which the playback interface of the second video includes respective second key clip information corresponding to each second video clip of the second video; receiving a selection operation of a certain piece of second key clip information on the playback interface; and playing a second video clip corresponding to a selected piece of the second key clip information on the playback interface based on the selection operation.

Optionally, an operation control corresponding to the second video clip is displayed on the playback interface, and the method further includes: receiving a trigger operation on the operation control; and processing the second video clip corresponding to the operation control based on a function indicated by the operation control and the trigger operation.

Optionally, the pieces of second key clip information are displayed on the playback interface based on a display order, and the method further includes: receiving an order adjustment operation for the pieces of second key clip information; adjusting the display order of the pieces of second key clip information based on the order adjustment operation; and playing the second video clips corresponding to the second key clip information based on an adjusted display order of the pieces of second key clip information.

Optionally, the method includes playing the second video clips of the second video corresponding to the second key clip information based on the adjusted display order of the pieces of second key clip information, in response to a playback operation on the second video received after the second video is closed.

Optionally, a size of a region occupied by the first key clip information in a first direction matches a duration of the first video chip corresponding to the first key clip information.

Optionally, a progress bar on the playback interface includes multiple sub-progress bars, and the first key clip information is displayed on a respective sub-progress bar of a corresponding first video clip.

An electronic device is provided. The electronic device includes: a processor; and a memory for storing instructions executable by the processor; in which, the processor is configured to execute the instructions to implement a method for video processing as described above.

A non-transitory computer readable storage medium is provided. When instructions in the storage medium are executed by a processor of an electronic device, the electronic device is caused to execute a method for video processing as described above.

It is to be understood that the above general description and the following detailed description are only exemplary and explanatory, which are not construed to limit the disclosure.

### BRIEF DESCRIPTION OF THE DRAWINGS

The drawings herein are incorporated into the specification and constitute a part of the specification, illustrating embodiments conforming to the disclosure, and together with the specification are used to explain the principle of the disclosure, and do not constitute an improper limitation of the disclosure.
Fig. 1 is an architecture diagram illustrating a video system according to an example embodiment.
FIG. 2 is a timing diagram illustrating a method for video playing according to an example embodiment.
FIG. 3 is a schematic flowchart illustrating a method for video playing according to an example embodiment.
FIG. 4 is a schematic diagram illustrating a video playback interface including clip information according to an example embodiment.
FIG. 5 is a schematic diagram illustrating a video playback interface including a playing progress according to an example embodiment.
FIG. 6 is a schematic flowchart illustrating a method for video playing according to another example embodiment.
FIG. 7 is a schematic diagram illustrating operating a control on a video playback interface according to an example embodiment.
FIG. 8 is a schematic diagram illustrating a result of operating a control according to an example embodiment.
FIG. 9 is a schematic diagram illustrating operating a piece of clip information on a video playback interface according to an example embodiment.
FIG. 10 is a schematic diagram illustrating displaying controls on a video playback interface according to an example embodiment.
FIG. 11 is a schematic diagram illustrating adjusting a display order of pieces of clip information according to an example embodiment;
FIG. 12 is a schematic diagram illustrating a video playback interface including clip information according to another example embodiment.
FIG. 13 is a flowchart illustrating a method for video processing according to an example embodiment.
FIG. 14 is a block diagram illustrating an apparatus for video playing according to an example embodiment.
FIG. 15 is a block diagram illustrating an apparatus for video processing according to an example embodiment.
FIG. 16 is a block diagram illustrating an electronic device according to an example embodiment.

### DETAILED DESCRIPTION

In order to enable those of ordinary skill in the art to well understand technical solutions of the disclosure, technical solutions according to embodiments of the disclosure will be described clearly and completely in conjunction with accompanying drawings.

It is to be noted that terms "first" and "second" used in the specification, claims and drawings of the disclosure are used to distinguish similar objects, and not necessarily used to describe a specific sequence or order. It is to be understood that the data used in this way can be interchanged under appropriate circumstances so that the embodiments of the disclosure described herein can be implemented in an order other than those illustrated or described herein. The implementation manners described in the following example embodiments do not represent all implementation manners consistent with the disclosure. Rather, they are merely examples of apparatuses and methods consistent with some aspects of the disclosure as detailed in the appended claims.

It is to be noted that user information (including but not limited to user equipment information, user personal information, etc.) involved in the disclosure has been authorized by the user or fully authorized by all parties.

Video clips involved in the disclosure may be clips obtained by dividing a video based on the video content. For example, in a case where three products are introduced in a video, the video can be divided into three video clips and each clip corresponds to a respective product.

At present, in a case that a user is interested in a certain part of a video, the user may keep dragging a process bar until the content of interest is played, which results in inconvenience for the user to select and play the video content of interest.

Therefore, the disclosure provides a method and an apparatus for video processing, a device, a server, and a storage medium to at least solve the above problem.

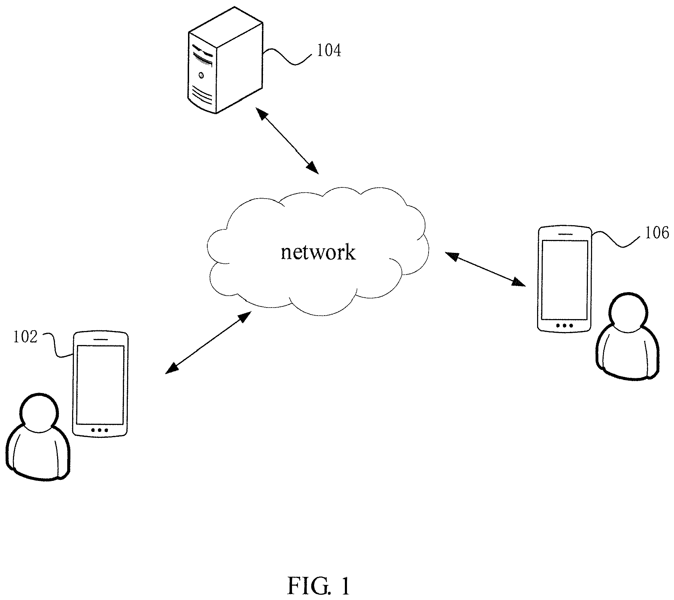

FIG. 1 is an architecture diagram illustrating a video system according to an example embodiment. As illustrated in FIG. 1, a video creator can create a first video through an electronic device 102. In a process of creating the first video, the electronic device 102 obtains multiple pieces of first key clip information respectively corresponding to multiple first video pieces of the first video. Each piece of first key clip information is information of a key content of a corresponding first video clip. For example, a certain first video has 3 first video clips. The first one of these 3 first video clips is related to dance and the key clip information corresponding to this first video clip may be "Dance, Performer: Zhang San". The second one of these 3 first video clips is related to a sketch and the key clip information corresponding to this first video clip may be "Sketch, Performers: Li Si and Wang Er". The third one of these 3 first video clips is related to a song and the key clip information corresponding to this first video clip may be "Song, Performer: Xiao Ming".

After the electronic device 102 obtains the pieces of first key clip information respectively corresponding to the multiple first video clips of the first video, the electronic device 102 sends the pieces of first key clip information to the server 104.

The server 104 receives the pieces of first key clip information sent by the electronic device 102 and stores the pieces of first key clip information and the first video clips in correspondence.

When a video viewer watches a second video through the electronic device 106, the electronic device 106 obtains the pieces of second key clip information from the server 104 and displays the pieces of second key clip information on the playback interface of the second video. In a case that the electronic device 106 receives a selection operation of a certain piece of second key clip information, the second video clip corresponding to the selected piece of second key clip information is played on the playback interface. For example, a certain second video has 3 second video clips. During the playback of the second video, pieces of second key clip information respectively corresponding to the three second video clips are displayed on the playback interface of the second video. In a case where the video watcher selects a piece of second key clip information, for example "Dance, Performer: Zhang San", the playback interface jumps directly to the second video clip corresponding to this piece of second key clip information.

It is to be noted that the electronic device 102 and the electronic device 106 may be the same electronic device or different electronic devices. The term "first video" and "second video" are only used to distinguish the two videos. The first video is used as an example to describe creation of the video by the electronic device, and the second video is used an example to describe playing of the video by the electronic device. In some examples, the first video and the second video can be the same video. In some examples, the first video and the second video can be different videos. The first video is a video that is created on the electronic device 102. The second video is a video that is played on the electronic device 106.

In a case where the electronic device 102 and the electronic device 106 are different electronic devices, each of the electronic device 102 and the electronic device 106 may be equipped with a respective video client. The electronic device 102 may process the first video through the video client to create a first video and the electronic device 106 can play the second video through the video client. The electronic device 102 and the electronic device 106 may include: a smart phone, a tablet computer, a notebook computer, a desktop computer, a smart TV, and the like.

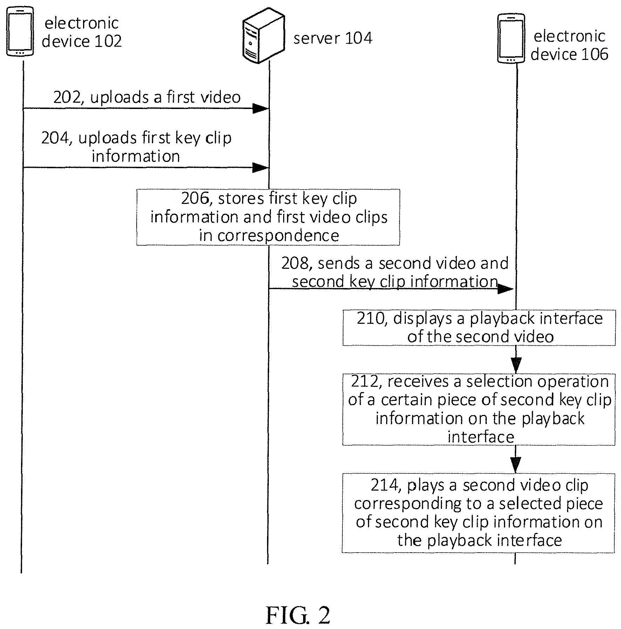

Based on the above-mentioned video system, the disclosure provides a method for video processing implemented by the video system. FIG. 2 is a timing diagram illustrating a method for video processing according to an example embodiment.

As illustrated in FIG. 2, the method for video processing includes the following.

At 202, the electronic device 102 uploads the first video to the server.

At 204, the electronic device 102 obtains the pieces of first key clip information respectively corresponding to the multiple first video clips of the first video based on an operation for adding key clip information to the first video from a user (which refers to the video creator) and sends the pieces of first key clip information to the server 104.

It is to be noted that there may be multiple ways to add the first key clip information to the first video.

As an example, the video creator can add the first key clip information to the video. After recording of a video is finished, the video creator can divide the first video into multiple first video clips and add a respective piece of first key clip information to each first video clip. It is also possible that the video creator records each first video clip, and every time the recording of a first video clip is finished, the video creator adds the first key clip information for the first video clip. It is also possible that the video creator uniformly adds a respective piece of first key clip information for each first video clip mutually after recording of all first video clips is finished.

As another example, the first key clip information can be automatically added to the first video by means of artificial cognition. For example, the video creator can divide the first video into multiple first video clips or recognize the content of the first video, and divide the first video into multiple first video clips based on the result of the content recognition of the first video. After the first video is divided into multiple first video clips, the respective first key clip information is extracted from the content information of each first video clip.

The method for video processing further includes the following.

At 206, after receiving the pieces of first key clip information sent by the electronic device 102, the server 104 stores the pieces of first key clip information and the first video clips in correspondence.

At 208, in a case where the server 104 receives an information request sent by the electronic device 106, the server 104 sends the pieces of second key clip information and the corresponding second video clips to the electronic device 106.

At 210, the electronic device 106 displays a playback interface of the second video. The playback interface includes respective second key clip information corresponding to each second video clip.

At 212, the electronic device 106 receives a selection operation of a certain piece of second key clip information on the playback interface.

At 214, the electronic device 106 plays a second video clip corresponding to the selected piece of second key clip information on the playback interface based on the selection operation.

In some embodiment of the disclosure, while the video watcher is watching the second video, the pieces of second key clip information corresponding to the second video clips are displayed on the playback interface of the second video. In this way, it is convenient for the video watcher to select the video content of interest to play based on the pieces of second key clip information. In a case where the video watcher desires to play a certain second video clip, the video watcher can select the second clip information corresponding to this second video clip, and the second video clip corresponding to the selected second key clip information is played on the playback interface of the second video such that there is no need to drag the progress bar by the video watcher to play the video content of interest. In this way, it is convenient for the video watcher to select the video content of interest to play.

Based on FIG. 2, the method for video processing according to the first aspect of the disclosure and the method for video processing according to the second aspect of the disclosure will be described below.

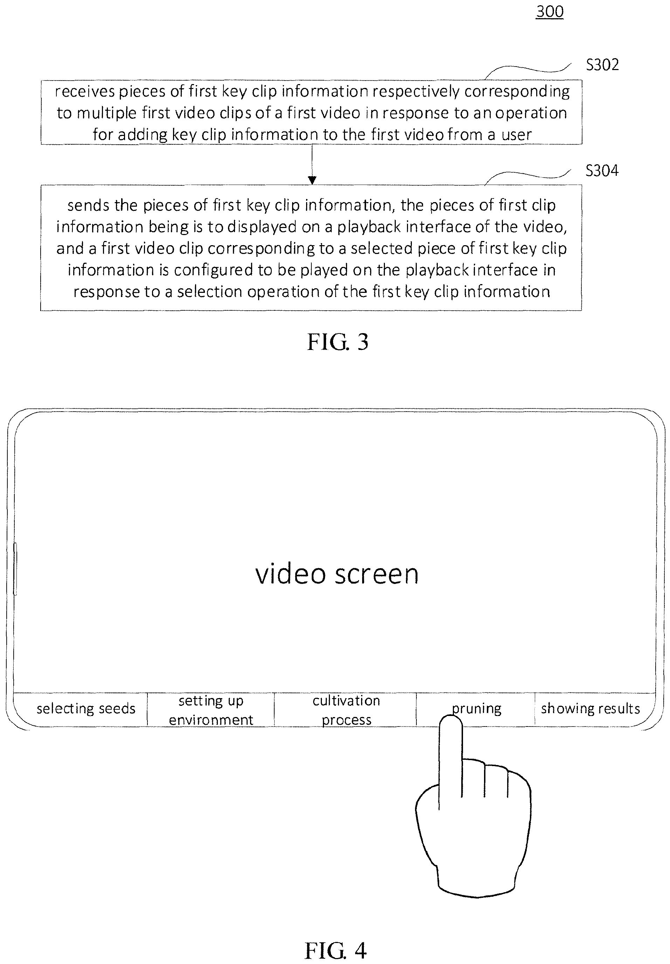

The first aspect of the disclosure provides a method for video processing. The method for video processing can be applied to the electronic device 102. FIG. 3 is a schematic flowchart illustrating a method for video processing according to an example embodiment.

As illustrated in FIG. 3, the method 300 for video processing includes the following.

At 302, pieces of first key clip information respectively corresponding to multiple first video clips of a first video are obtained based on an operation for adding key clip information to the first video from a user.

The operation for adding the key clip information may be an operation that the user operates a control on a video editing interface. The control corresponds to a function for adding the key clip information to the first video.

The first video can be divided in advance. For example, the first video can be divided into multiple first video clips. A first video clip may be a video file. The first video clip can be obtained by manually dividing the first video by the video creator or the first video clip can be obtained by automatically dividing the first video through artificial intelligence.

The first key clip information may include at least one of the following: keywords in speech of the first video clip, keywords in subtitles of the first video clip, keywords in images of the first video clip, and information related to items in images of the first video clip.

As an example, obtaining the pieces of first key clip information respectively corresponding to the multiple first video clips of the first video may include: obtaining the pieces of first key clip information respectively corresponding to the multiple first video clips set by the user.

In an example of adding the key clip information, in a case that that the video creator records a first video on how to culture flowers, the duration of this first video is about 1 hour and the first video includes 5 video clips, namely, selecting flower seeds (the duration is about 10 minutes), setting up a cultivation environment (the duration is about 10 minutes), culturing the flowers (the duration is about 20 minutes), pruning (the duration is about 5 minutes), and showing the cultivation results (the duration is about 15 minutes). When the video creator is processing the video, the correspondence between the first video clips, the first key clip information, and the operation types can be set as Table 1:

**Table 1**

| first video clip | first key clip information | supportable operation type |
|---|---|---|
| 0 to tenth minutes | selecting seeds | share, download, like |
| tenth to twentieth minutes | setting up a cultivation environment | share, download, like |
| ··· | ··· | ··· |

After the video creator set the correspondence as shown in Table 1, the correspondence can be uploaded to the server. After the correspondence is uploaded to the server, it is possible that the video creator modifies or cancels the correspondence. In addition, after the first video is released for the video watchers to watch, the video creator can get the number of likes (or thumbs-up), downloads, and shares of each first video clip.

In another example of adding the key clip information, the video creator can add the first key clip information during a process of recording the video. For example, when recording of a first video clip is finished, the video creator can add the first key clip information for the first video clip, to realize that the first key clip information is added for the first video clip while the first video clips are being recorded. In another example of adding the key clip information, after recording of all first video clips of the first video are finished, the video creator may uniformly add a respective piece of first key clip information to each first video clip.

As another example, obtaining the pieces of first key clip information respectively corresponding to the multiple first video clips of the first video may include: obtaining content information of a first video clip from at least one image frame of the first video clip and extracting the first key clip information corresponding to the first video clip from the content information.

Obtaining the content information of the first video clip from at least one image frame of the first video clip may include: obtaining the content information of the first video clip by performing text recognition and image recognition on each image frame of the first video clip; or obtaining the content information of the first video clip by inputting the at least one image frame of the first video clip into an image recognition model.

Extracting the first key clip information corresponding to the first video clip from the content information of the first video clip may include: extracting keywords from the content information of the first video clip as the first key clip information corresponding to the first video clip.

In this way, it is realized that the corresponding first key clip information is automatically obtained from the first video clip of the first video without the need of manual setting the first key clip information by the video creator, which improves the convenience.

The method 300 for video processing further includes the following.

At 304, the pieces of first key clip information are sent. The pieces of first key clip information are configured to be displayed on the playback interface of the first video. The first video clip corresponding to a selected piece of first key clip information is configured to be played on the playback interface based on a selection information of the first key clip information.

In 304, the pieces of first key clip information can be sent to a server (such as a video server), such that the server stores the first video clips and the pieces of first key clip information in correspondence. Before playing the second video, the electronic device may obtain the second video clips and the pieces of second key clip information that are stored in correspondence from the server and display a respective piece of second key clip information corresponding to each second video clip of the second video on the playback interface of the second video.

The progress bar on the playback interface includes multiple sub-progress bars and the key clip information is configured to be displayed on the sub-progress bar of the corresponding first or second video clip. In detail, the multiple sub-progress bars are in a one-to-one correspondence with the multiple first or second video clips of the first or second video and a piece of first or second key clip information is displayed on one sub-progress bar. In this way, during the playback of any one of the multiple first or second video clips, the playback progress of the first or second video clip can be present through the sub-progress bar.

Descriptions will be made to embodiments of the disclosure by taking a video of flower cultivation and growth as an example below.

As illustrated in FIG. 4, during the process of playing a video on the flower cultivation and growth, pieces of second key clip information of 5 second video clips are displayed on the playback interface of the second video. The second key clip information of the 5 second video clips may be "selecting seeds", "setting up environment", "cultivation process", "pruning" and "showing results". The video watcher can get the key content of each second video clip through the second key clip information of the second video clip. Assuming that the video watcher is interested in the second video clip corresponding to the "pruning", the video watcher can operate on the second key clip information of the "pruning" displayed on the playback interface, and the electronic device can directly play the second video clip corresponding to the "pruning".

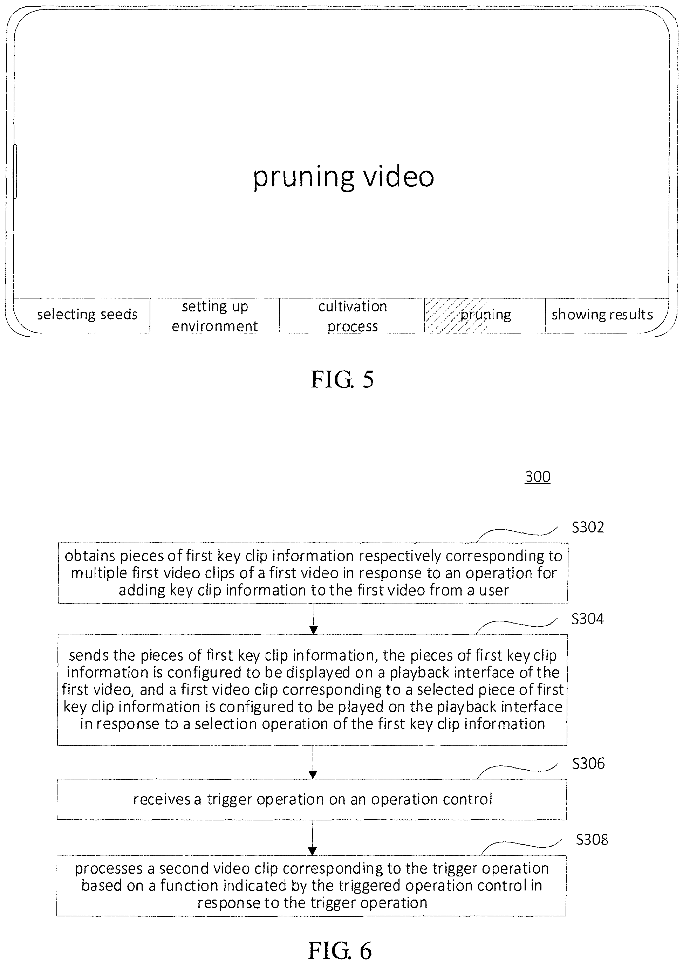

As illustrated in FIG. 5, during the playback of the second video clip corresponding to the "pruning", the playback progress of the second video clip is displayed through the sub-progress bar corresponding to the second video clip.

In some embodiments of the disclosure, by adding the pieces of key clip information respectively corresponding to the multiple video clips of the video, when the video watcher is watching the second video, the pieces of second key clip information corresponding to the second video clips are displayed on the playback interface of the second video, which is convenient for the video watcher to flexibly select the video content of interest to play based on the second key clip information. In a case that the electronic device receives the selection operation of a piece of second key clip information by the video watcher, the second video clip corresponding to the selected piece of second key clip information is played without the need of dragging the progress bar by the video viewer to play the video clip of interest. Thus, it is convenient for the video watcher to select the video clip of interest to play.

In one or more embodiments of the disclosure, after the pieces of first key clip information are sent, the method 300 for video processing may further include: setting an operation control for each first video clip of the first video based on a setting operation. The operation control includes at least one of the following: a share control, a download control and a like control. In this way, the operation controls corresponding to the second video clips are also displayed on the playback interface. In this case, as illustrated in FIG. 6, the method 300 for video processing may further include the following.

At 306, a trigger operation on an operation control is received. For example, the trigger operation may be a single-click operation, a double-click operation, a long-press operation, or the like.

At 308, the second video clip corresponding to the operation control is processed based on a function indicated by the triggered operation control based on the trigger operation.

In 308, in a case where the triggered operation control is the share control, the second video clip corresponding to the triggered operation control is shared to friends selected by the user from a friend list. In a case where the triggered operation control is the download control, the second video clip corresponding to the triggered operation control is downloaded. In a case where the triggered operation control is the like control, a like is given to the second video clip corresponding to the triggered operation control and a total number of likes of the second video clip can be displayed.

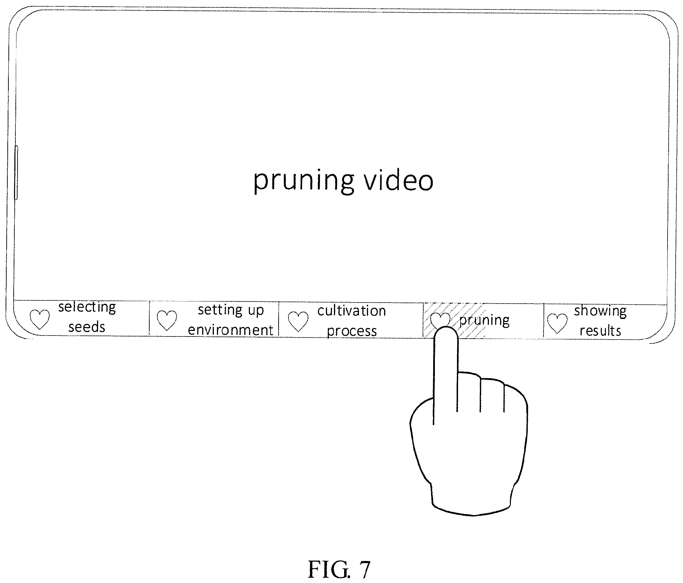

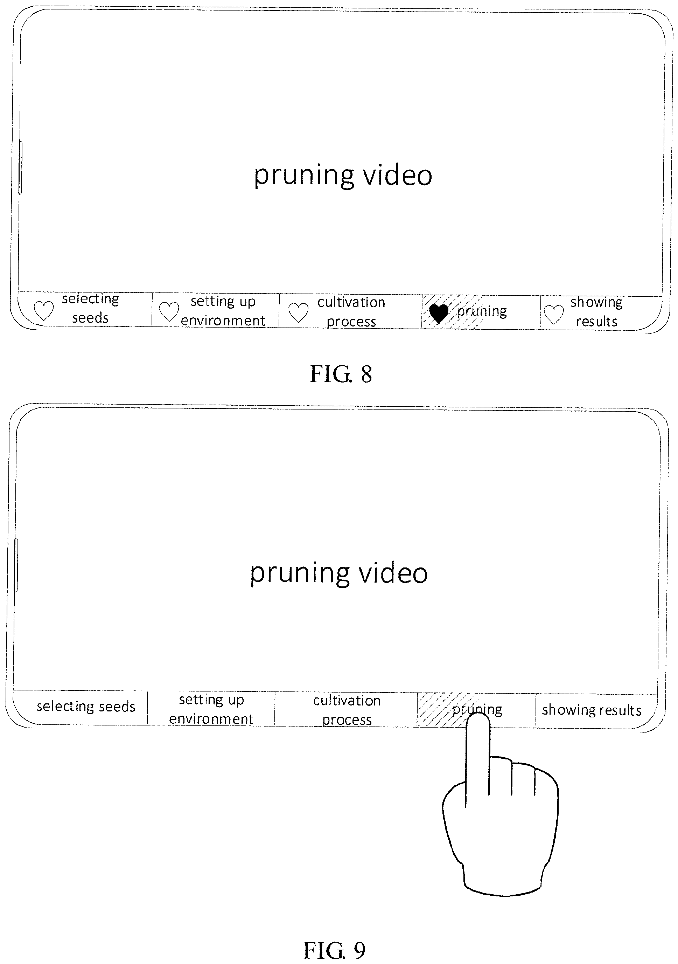

As illustrated in FIG. 7, a respective like control (such as a heart-shaped control) corresponding to each second video clip of the video is displayed on the playback interface of the video. During the playback of the second video clip corresponding to the "pruning", if the video watcher thinks that the second video clip explains the flower pruning technique professionally, the video watcher can operate the like control corresponding to the second video clip. The playback interface is displayed as FIG. 8. On the playback interface illustrated in FIG. 8, the like control corresponding to the second video clip corresponding to the "pruning" becomes a heart-shaped control filled with color. In this way, it is realized to give a like to the second video clip corresponding to the "pruning".

In embodiments of the disclosure, when the operation control corresponding to the second video clip is displayed on the playback interface, the user can operate the second video clip of the video, which meets the needs of the user.

In one or more embodiments of the application, the method 300 for video processing may further include the following.

In a case of receiving a control display operation from the video watcher, the operation controls corresponding to the second video clips are displayed on the playback interface.

The control display operation can be a click operation, a double-click operation, or a long-press operation on the key clip information. It is to be noted that since the control display operation and the selection operation both operate on the second key clip information, in order to distinguish the control display operation and the selection operation, the type of the control display operation is different from the type of the above selection operation. For example, the control display operation is a double-click operation or a long-press operation, and the selected operation can be a click operation.

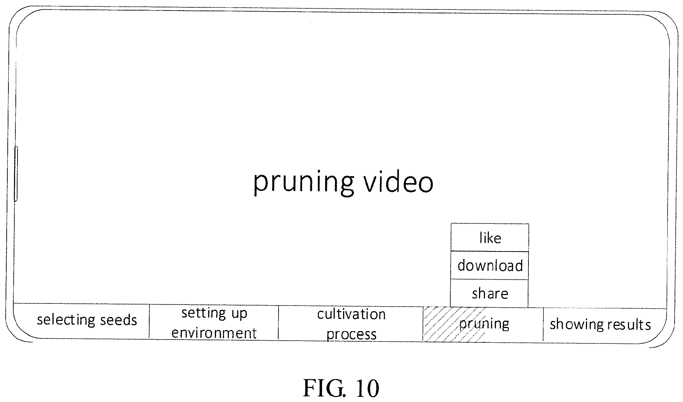

Descriptions will be made in combination with FIG. 9 and FIG. 10 by taking the video of the flower cultivation and growth as an example below.

As illustrated in FIG. 9, in a case where a respective piece of second key clip information corresponding to each second video clip of the second video is displayed on the playback interface of the second video, the double-click operation on the key clip information of "pruning" is received. As illustrated in FIG. 10, the like control, the download control, and the share control corresponding to the "pruning" are displayed. The video watcher can give a like to the second video clip corresponding to the "pruning", download the second video clip corresponding to the "pruning", and share the second video clip corresponding to the "pruning".

In some embodiments of the disclosure, the control corresponding to each second video clip is not displayed normally. Instead, when the control display operation for a certain piece of second key clip information is received, the control corresponding to the pieces of second key clip information or each second video clip is displayed. In this way, it is realized that the controls are displayed when the video watcher needs to use the controls, and it is avoided that watching the video by the video watcher is affected by always displaying the controls in the process of playing the video.

In one or more embodiments of the disclosure, the pieces of second key clip information are arranged in a predetermined display order on the playback interface and the method 300 for video processing may further include the following.

An order adjustment operation for the pieces of second key clip information is received.

The display order of the pieces of second key clip information on the playback interface is adjusted based on the order adjustment operation and the second video clips corresponding to the second key clip information are played based on an adjusted display order of the pieces of second key clip information.

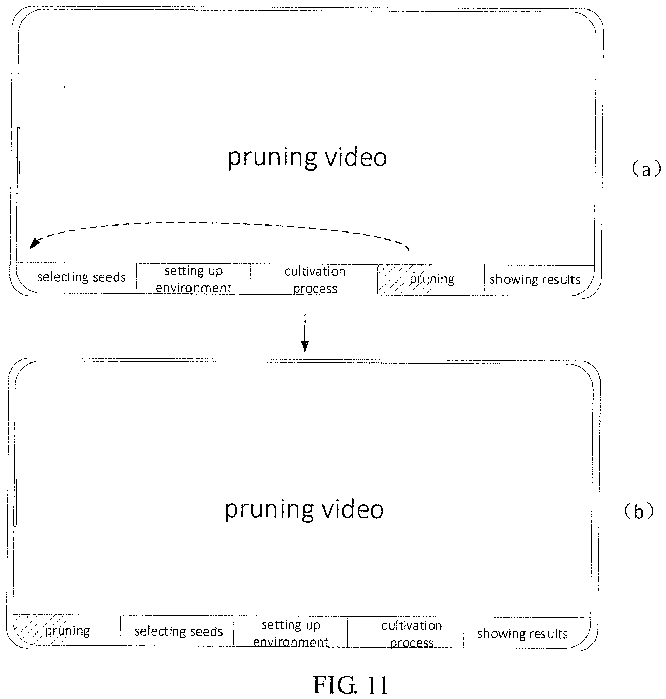

Descriptions will be made to adjusting the display order of the pieces of second key clip information on the playback interface in combination with FIG. 11 by taking the video of flower cultivation and growth as an example below.

As illustrated in FIG. 11(a), the order adjustment operation that adjusts the second video clip corresponding to the "pruning" to be prior to the second video clip corresponding to the "selecting seeds" is received. The playback interface of the second video is displayed as FIG. 11(b) and the second video clips are played based on the adjusted display order, i.e., the second video clip corresponding to the "pruning" is played prior to the second video clip corresponding to the "selecting seeds".

In some embodiments of the disclosure, the video watcher can adjust the display order of the pieces of the second key clip information on the playback interface according to their needs, such that the second video clips are played based on the adjusted display order, which satisfies the need of adjusting the playing order of the video clips from the video watcher.

In one or more embodiments of the disclosure, after adjusting the display order of the pieces of second key clip information on the playback interface, the method 300 for video processing may further include the following.

The second video clips corresponding to the key clip information are played based on the adjusted display order of the pieces of second key clip information based on receiving a playback operation of the second video after the second video is closed.

In the embodiment of the disclosure, when the second video is opened and played again after the second video is closed, the second video clips are played based on the adjusted display order without the need of re-adjusting the playing order of the video clips by the video watcher.

In one or more embodiments of the disclosure, a size of a region occupied by a piece of first or second key clip information in the first direction matches a duration of the first or second video clip corresponding to the first or second piece of key clip information.

As an example, the pieces of first or second key clip information of the video are arranged end to end in the first direction. That is, a tail position of a piece of first or second key clip information is adjacent to a head position of a next piece of first or second key clip information. The first direction may be a horizontal direction or a vertical direction.

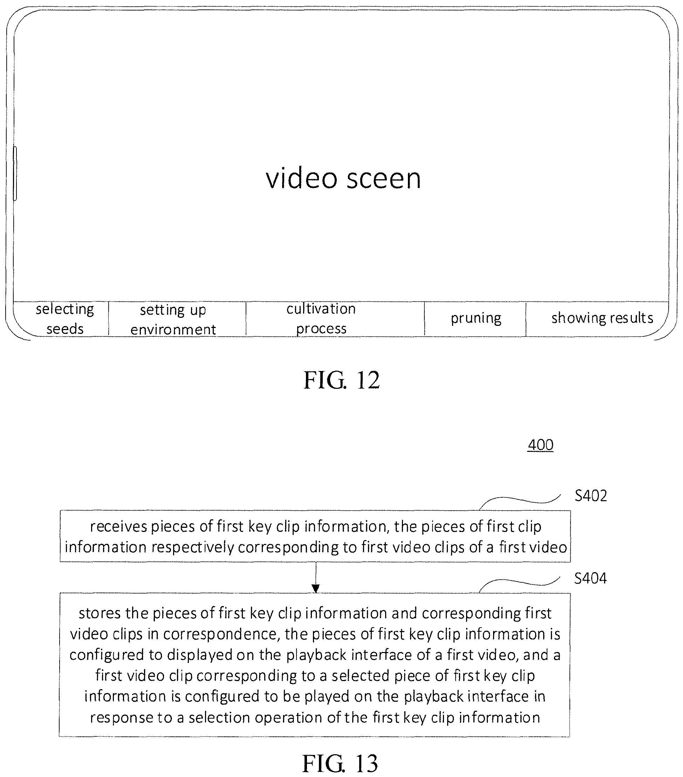

Descriptions will be made to the size of the region occupied by a piece of first or second key clip information in the first direction matching the duration of the video clip corresponding to the piece of first or second key clip information in combination with FIG. 12 below.

As illustrated in FIG. 12, since durations of the first or second video clips of the first or second video of the flower cultivation and growth are different, the sizes of the regions occupied by the pieces of first or second key clip information corresponding to the first or second video clips are also different in the horizontal direction. The duration of the first or second video clip is positively correlated to the size of the region occupied by the corresponding first or second key clip information. That is, the longer the duration of the first or second video clip, the larger the size of the region occupied by the first or second key clip information corresponding to the first or second video clip in the horizontal direction.

In some embodiments of the disclosure, the size of the region occupied by each piece of first or second key clip information in the first direction matches the duration of the corresponding first or second video clip. Therefore, the video watcher can get the duration of the second video clip corresponding to a piece of second key clip information based on the size of the region occupied by the piece of second key clip information in the first direction, which is convenient for the video watcher to select a second video clip from the multiple second video clips.

The above descriptions are the method for video processing applied to the electronic device according to the disclosure. With the method for video processing according to the disclosure, the video creator can make the following settings based on the needs of the scene: setting whether to support reordering the pieces of second key clip information and setting whether to support the download operation of second video clips. The video watcher can also make settings according to the scene, such as setting whether to display the second key clip information of each second video clip, or the like.

The second aspect of the disclosure provides a method for video processing, applied to a server. FIG. 13 is a schematic flowchart illustrating another method for video processing according to an example embodiment.

As illustrated in FIG. 13, the method 400 for video processing includes the following.

At 402, pieces of first key clip information are obtained. The pieces of first key clip information respectively corresponding to first video clips of a first video.

At 404, the pieces of first key clip information and the corresponding first video clips are stored in correspondence. The first key clip information is configured to be displayed on the playback interface of the first video. The first video clip corresponding to a selected piece of first key clip information is configured to be played on the playback interface based on a selection operation of the selected piece of first key clip information.

In some embodiment of the disclosure, by storing the pieces of first key clip information and the corresponding first video clips in correspondence, the electronic device can obtain the pieces of second key clip information and the second video clips that are stored in correspondence to display the second key clip information respectively corresponding to the second video clips on the playback interface of the second video before playing the second video. In this way, it is convenient for the video watcher to select the video content of interest to play based on the second key clip information. When the video watcher desires to play a certain video clip, the video watcher can select the piece of key clip information corresponding to the video clip. The video clip corresponding to the selected piece of key clip information is played on the playback interface video without the need of dragging the progress bar by the video watcher to play the video content of interest. In this way, it is convenient for the video watcher to select the video content of interest to play.

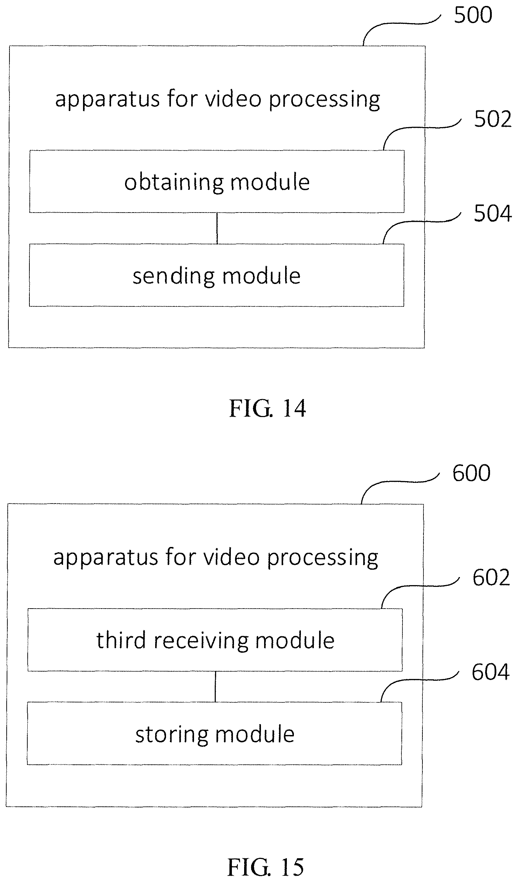

Corresponding to the method for video processing according to the first aspect of the disclosure, the third aspect of the disclosure provides an apparatus for video processing. FIG. 14 is a schematic block diagram illustrating an apparatus for video processing according to an example embodiment. As illustrated in FIG. 14, the apparatus 500 for video processing includes an obtaining module 502 and a sending module 504.

The obtaining module 502 is configured to obtain pieces of first key clip information respectively corresponding to multiple first video clips of a first video based on an operation for adding key clip information to the first video from a video watcher.

The sending module 504 is configured to send the pieces of first key clip information. The first key clip information is configured to be displayed on the playback interface of the first video. A first video clip corresponding to a selected piece of first key clip information is configured to be played on the playback interface based on a selection operation on the first key clip information.

In the embodiments of the disclosure, by adding the pieces of key clip information respectively corresponding to the multiple video clips of the video, when the video watcher is watching the second video, the piece of second key clip information respectively corresponding to the second video clips are displayed on the playback interface of the user, which is convenient for the video watcher to flexible to select the video content of interest to play based on the second key clip information.

In one or more embodiments according to the disclosure, the obtaining module 502 may include an obtaining unit and an extracting unit.

The obtaining unit is configured to obtain content information of a first video clip from at least one image frame of the first video clip.

The extracting unit is configured to extract the first key clip information corresponding to the first video clip from the content information of the first video clip.

In this way, it is realized that the corresponding first key clip information is automatically obtained from the first video clip of the first video without the need of manually setting the key clip information by the video watcher, which improves the convenience.

In one or more embodiments according to the disclosure, an operation control corresponding to the video clip is displayed on the playback interface, and the apparatus 500 for video processing may further include a first receiving module and a processing module.

The first receiving module is configured to receive a trigger operation on the operation control.

The processing module is configured to process the second video clip corresponding to the operation control based on a function indicated by the operation control based on the trigger operation.

In the embodiment of the disclosure, in a case where the operation control corresponding to the second video clip is displayed on the playback interface, the video watcher can operate the second video clip of the second video, which meets the video watcher's need for operating the video clip.

In one or more embodiments according to disclosure, the pieces of second key clip information are arranged in a predetermined display order on the playback interface, and the apparatus 500 for video processing may further include a second receiving module, an adjusting module, and a first playing module.

The second receiving module is configured to receive an order adjustment operation for the pieces of second key clip information.

The adjusting module is configured to adjust the display order of the pieces of second key clip information on the playback interface based on the order adjustment operation.

The first playing module is configured to play the second video clips corresponding to the second key clip information based on the adjusted display order of the pieces of second key clip information.

In the embodiments of the disclosure, the video watcher can adjust the order in which the pieces of second key clip information are displayed on the playback interface according to their own needs, so that each second video clip is played based on the adjusted display order, which satisfies the need of adjusting the playing order of the second video clips from the video watcher.

In one or more embodiments according to disclosure, the apparatus 500 for video processing may further include a second playing module.

The second playing module is configured to play the second video clips corresponding to the second key clip information based on the adjusted display order of the pieces of second key clip information based on a play operation of the second video received after the second video is closed.

In the embodiment of the disclosure, when the second video is opened and played again after the second video is closed, the second video clips are played based on the adjusted display order without the need of re-adjusting the playing order of the second video clips by the video watcher.

In one or more embodiments according to disclosure, the size of a region occupied by a piece of first or second key clip information in a first direction matches a duration of the first or second video clip corresponding to the piece of first or second key clip information.

In the embodiments of the disclosure, the size of the region occupied by a piece of first or second key clip information in the first direction matches the duration of the corresponding first or second video clip. Therefore, the video watcher can get the duration of the second video clip corresponding to each second key clip information based on the size of the region occupied by the second key clip information in the first direction, which is convenient for the video watcher to choose a second video clip from multiple second video clips.

In one or more embodiments according to the disclosure, the progress bar on the playback interface includes multiple sub-progress bars, and the first or second key clip information is configured to be displayed on the sub-progress bar of the corresponding first or second video clip. In this way, during the playback of any one of the multiple second video clips, the playback progress of the second video clip can be displayed through the sub-progress bar.

Corresponding to the method for video processing according to the second aspect of the disclosure, a fourth aspect of the disclosure provides an apparatus for video processing. FIG. 15 is a schematic block diagram illustrating an apparatus for video processing according to an example embodiment. As illustrated in FIG. 15, the apparatus 600 for video processing includes a third receiving module 602 and a storing module 604.

The third receiving module 602 is configured to receive pieces of first key clip information. The pieces of first key clip information respectively correspond to first video clips of a first video.

The storing module 604 is configured to store the pieces of first key clip information and corresponding first video clips in correspondence. The first key clip information is configured to be displayed on a playback interface of the first video. A first video clip corresponding to a selected piece of first key clip information is configured to be played on the playback interface based on a selection operation of the selected piece of first key clip information.

In the embodiment of the disclosure, by storing the pieces of first key clip information and the corresponding first video clips in correspondence, the electronic device can obtain the pieces of second key clip information and the second video clips that are stored in correspondence to display the second key clip information respectively corresponding to the second video clips on the playback interface of the second video before playing the second video. In this way, it is convenient for the video watcher to select the video content of interest to play based on the second key clip information. When the video watcher desires to play a certain video clip, the video watcher can select the piece of key clip information corresponding to the video clip. The video clip corresponding to the selected piece of key clip information is played on the playback interface video without the need of dragging the progress bar by the video watcher to play the video content of interest. In this way, it is convenient for the video watcher to select the video content of interest to play.

The disclosure further provides an electronic device. The electronic device includes a processor and a memory for storing instructions executable by the processor. The processor is configured to execute the instructions to implement the above-mentioned method for video processing according to any one of the embodiments of the first aspect.

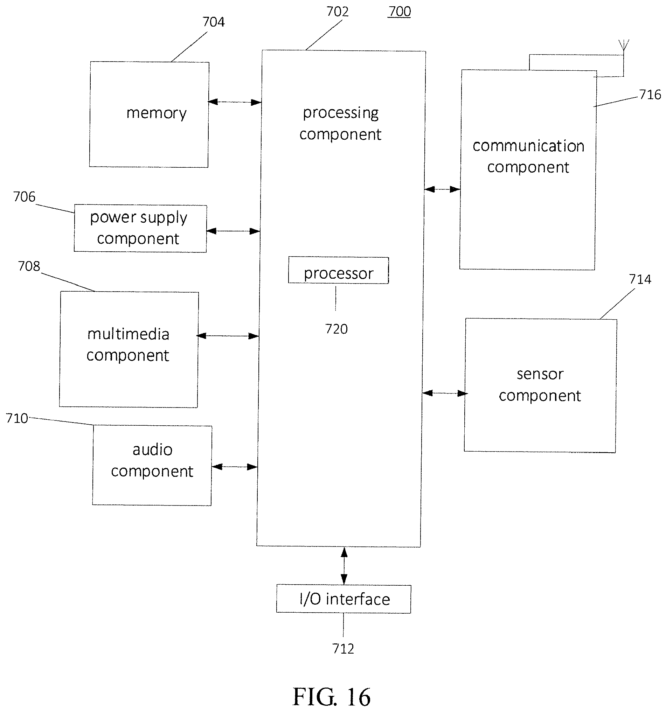

FIG. 16 is a schematic diagram illustrating an electronic device according to an example embodiment. For example, the electronic device 700 may be a mobile phone, a computer, a digital broadcasting terminal, a messaging device, a game console, a tablet device, a medical device, a fitness device, a personal digital assistant, and the like.

As illustrated in FIG. 16, the electronic device 700 may include one or more of the following components: a processing component 702, a memory 704, a power component 706, a multimedia component 708, an audio component 710, an input/output (I/O) interface 712, and a sensor component 714 and a communication component 716.

The processing component 702 generally controls the overall operations of the electronic device 700, such as operations associated with display, telephone calls, data communications, camera operations, and recording operations. The processing component 702 may include one or more processors 720 to execute instructions to complete all or part of the steps of the foregoing method. In addition, the processing component 702 may include one or more modules to facilitate the interaction between the processing component 702 and other components. For example, the processing component 702 may include a multimedia module to facilitate the interaction between the multimedia component 708 and the processing component 702.

The memory 704 is configured to store various types of data to support the operation of the electronic device 700. Examples of such data include instructions for operating any application or method on the electronic device 700, contact data, phone book data, messages, pictures, videos, and the like. The memory 704 can be implemented by any type of volatile or non-volatile storage device or a combination thereof, such as static random-access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 706 provides power to various components of the electronic device 700. The power supply component 706 may include a power management system, one or more power supplies, and other components associated with the generation, management, and distribution of power for the electronic device 700.

The multimedia component 708 includes a screen that provides an output interface between the electronic device 700 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor may not only sense the boundary of the touch or slide action, but also detect the duration and pressure related to the touch or slide operation. In some embodiments, the multimedia component 708 includes a front camera and/or a rear camera. When the electronic device 700 is in an operation mode, such as a shooting mode or a video mode, the front camera and/or the rear camera can receive external multimedia data. Each front camera and rear camera can be a fixed optical lens system or have focal length and optical zoom capabilities.

The audio component 710 is configured to output and/or input audio signals. For example, the audio component 710 includes a microphone (MIC). When the electronic device 700 is in an operation mode, such as a call mode, a recording mode, and a speech recognition mode, the microphone is configured to receive external audio signals. The received audio signal can be further stored in the memory 704 or sent via the communication component 716. In some embodiments, the audio component 710 further includes a speaker for outputting audio signals.

The I/O interface 712 provides an interface between the processing component 702 and a peripheral interface module. The above-mentioned peripheral interface module may be a keyboard, a click wheel, a button, and the like. These buttons may include, but are not limited to: home button, volume button, start button, and lock button.

The sensor component 714 includes one or more sensors for providing the electronic device 700 with various aspects of status assessments. For example, the sensor component 714 may detect an ON/OFF state of the electronic device 700 and a relative positioning of the components. For example, the components may be a display and a keypad of the electronic device 700. The sensor component 714 may also detect a change in position of the electronic device 700 or a component of the electronic device 700, the presence or absence of contact of the user with the electronic device 700, the orientation or acceleration/deceleration of the electronic device 700 and a temperature change of the electronic device 700. The sensor component 714 may include a proximity sensor configured to detect the presence of nearby objects without any physical contact. The sensor component 714 may also include an optical sensor (such as a CMOS or a CCD image sensor) for use in imaging applications. In some embodiments, the sensor component 714 may further include an acceleration sensor, a gyro sensor, a magnetic sensor, a pressure sensor, or a temperature sensor.

The communication component 716 is configured to facilitate wired or wireless communication between the electronic device 700 and other devices. The electronic device 700 can access a wireless network based on a communication standard, such as WiFi, an operator network (such as 2G, 3G, 4G, or 5G), or a combination thereof. In an example embodiment, the communication component 716 receives a broadcast signal or broadcast-related information from an external broadcast management system via a broadcast channel. In an example embodiment, the communication component 716 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an example embodiment, the electronic device 700 may be implemented as one or more application specific integrated circuits (ASIC), digital signal processors (DSP), digital signal processing devices (DSPD), programmable logic devices (PLD), field programmable gate arrays (FPGA), controllers, microcontrollers, microprocessors, or other electronic components, used to perform the above-mentioned method for playing a video according to any one of embodiments or the above-mentioned method for video processing according to any one of embodiments.

The disclosure further provides a server. The server includes a processor and a memory for storing instructions executable by the processor. The processor is configured to execute the instructions to implement a method for video processing according to the second aspect.

In some embodiments of the disclosure, there is also provided a non-transitory computer-readable storage medium including instructions, such as a memory including instructions. The foregoing instructions may be executed by the processor of the electronic device to implement the foregoing methods. For example, the non-transitory computer-readable storage medium may be ROM, random-access memory (RAM), CD-ROM, magnetic tape, floppy disk, optical data storage device, and the like.

The disclosure further provides a computer program product. When instructions in the computer program product are executed by the processor of the electronic device, the electronic device can execute a method for playing a video according to any one of the above embodiments or a method for video processing according to any one of the above embodiments.

Other embodiments of the disclosure will be apparent to those skilled in the art after considering the description and practicing the disclosure disclosed herein. The disclosure is intended to cover any variations, uses or adaptive changes of the disclosure. These variations, uses or adaptive changes are in accordance with general principles of the disclosure and include common knowledge or technical means in the art that are not disclosed herein. The description and embodiments are to be regarded as illustrative only, and the real scope and spirit of the disclosure are pointed out in the attached claims.

It is to be understood that the disclosure is not limited to the precise structures described above and illustrated in the drawings, and various modifications and changes may be made without departing from the scope thereof. The scope of the disclosure is merely limited by the attached claims.

## Claims

1. A method (300) for video processing, comprising:
obtaining (S302) pieces of first key clip information based on an operation for adding key clip information to a first video, wherein the pieces of first key clip information correspond to multiple first video clips of the first video respectively; and
sending (S304) the pieces of first key clip information, wherein the pieces of first key clip information are configured to be displayed on a playback interface of the first video, and a first video clip corresponding to a selected piece of first key clip information is configured to be played on the playback interface in response to a selection operation on the first key clip information.

2. The method (300) of claim 1, wherein said obtaining (S302) the pieces of first key clip information comprises:
obtaining content information of each first video clip from at least one image frame of the first video clip; and
extracting the first key clip information from the content information.

3. The method (300) of claim 1 or 2, further comprising:
receiving pieces of second key clip information and a second video, wherein the pieces of second key clip information correspond to multiple second video clips of the second video respectively;
displaying a playback interface of the second video, wherein the playback interface of the second video includes respective second key clip information corresponding to each second video clip of the second video;
receiving a selection operation of a certain piece of second key clip information on the playback interface; and
playing a second video clip corresponding to a selected piece of the second key clip information on the playback interface based on the selection operation.

4. The method (300) of claim 3, wherein an operation control corresponding to the second video clip is displayed on the playback interface, and the method (300) further comprises:
receiving (S306) a trigger operation on the operation control; and
processing (S308) the second video clip corresponding to the operation control based on a function indicated by the operation control and the trigger operation.

5. The method (300) of claim 3 or 4, wherein the pieces of second key clip information are displayed on the playback interface based on a display order, and the method (300) further comprises:
receiving an order adjustment operation for the pieces of second key clip information;
adjusting the display order of the pieces of second key clip information based on the order adjustment operation; and
playing the second video clips corresponding to the second key clip information based on an adjusted display order of the pieces of second key clip information.

6. The method (300) of claim 5, further comprising:
playing the second video clips of the second video corresponding to the second key clip information based on the adjusted display order of the pieces of second key clip information, in response to a playback operation on the second video received after the second video is closed.

7. The method (300) of any one of claims 1 to 6, wherein a size of a region occupied by the first key clip information in a first direction matches a duration of the first video chip corresponding to the first key clip information.

8. The method (300) of any one of claims 1 to 7, wherein a progress bar on the playback interface includes a plurality of sub-progress bars, and the first key clip information is displayed on a respective sub-progress bar of a corresponding first video clip.

9. An apparatus (500) for video processing, comprising:
an obtaining module (502), configured to obtain pieces of first key clip information based on an operation for adding key clip information to a first video, wherein the pieces of first key clip information correspond to multiple first video clips of the first video respectively; and
a sending module (504), configured to send the pieces of first key clip information, wherein the pieces of first key clip information are configured to be displayed on a playback interface of the first video, and a first video clip corresponding to a selected piece of first key clip information is configured to be played on the playback interface in response to a selection operation on the first key clip information.

10. The apparatus (500) of claim 9, wherein the obtaining module (502) includes:
an obtaining unit, configured to obtain content information of each first video clip from at least one image frame of the first video clip; and
an extracting unit, configured to extract the first key clip information from the content information.

11. The apparatus (500) of claim 9 or 10, wherein an operation control corresponding to a second video clip is also displayed on the playback interface after receiving pieces of second key clip information and a second video, wherein the pieces of second key clip information correspond to multiple second video clips of the second video respectively, and the apparatus (500) further includes:
a first receiving module, configured to receive a trigger operation on the operation control; and
a processing module, configured to process the second video clip corresponding to the operation control based on a function indicated by the operation control in response to the trigger operation.

12. The apparatus (500) of claim 11, wherein the pieces of the second key clip information are displayed on the playback interface based on a display order, and the apparatus (500) further includes:
a second receiving module, configured to receive an order adjustment operation for the pieces of second key clip information;
an adjustment module, configured to adjust the display order of the pieces of second key clip information based on the order adjustment operation; and
a first playing module, configured to play the second video clips corresponding to the second key clip information based on an adjusted display order of the pieces of second key clip information.

13. The apparatus (50) of claim 12, further comprising:
a second playing module, configured to play the second video clips corresponding to the second key clip information in the adjusted display order of the pieces of second key clip information, in response to a playback operation on the second video received after the second video is closed.

14. The apparatus (500) of claim any one of claims 9 to 13, wherein a size of a region occupied by each piece of first key clip information in a first direction matches a duration of the first video clip corresponding to the piece of first key clip information.

15. A non-transitory computer readable storage medium, wherein when instructions in the storage medium are executed by a processor (720) of an electronic device (102; 106; 700), the processor (720) is caused to execute a method for video processing of any one of claims 1 to 8.
